# EUROPÄISCHE PATENTSCHRIFT

(11) **EP 3 569 564 B1**
(45) Veröffentlichungstag und Bekanntmachung des Hinweises auf die Patenterteilung: **08.11.2023**
(21) Anmeldenummer: 19174002.6
(22) Anmeldetag: 13.05.2019
(51) Int. Cl.: B66F 9/075, B66F 17/00, B60Q 1/24, B60Q 1/50, F16P 3/14, F21S 10/06, G08B 5/38, B60Q 1/26, F21Y 115/10

(54) **FLURFÖRDERZEUG MIT RUNDUMLEUCHTE**
INDUSTRIAL TRUCK WITH SURROUNDING LIGHT
CHARIOT DE MANUTENTION POURVU DE GYROPHARE

(30) Priorität: 14.05.2018 DE 102018111374
(43) Veröffentlichungstag der Anmeldung: 20.11.2019
(73) Patentinhaber: Linde Material Handling GmbH, 63743 Aschaffenburg (DE)
(72) Erfinder: Sauer, Wolfgang, 45527 Hattingen (DE); Michniak, Jozef, 63911 Klingenberg am Main (DE)
(74) Vertreter: Patentship Patentanwaltgesellschaft

(56) Entgegenhaltungen:
- EP-A2- 2 056 268
- CN-A- 105 318 268
- DE-A1- 10 320 142
- DE-A1-102011 018 806
- US-A1- 2016 052 762

## Beschreibung

Die Erfindung betrifft ein Flurförderzeug mit einer Rundumleuchte, die einen Befestigungssockel und eine transparente Abdeckhaube aufweist und als LED-Warnblitzleuchte mit einer Mehrzahl von über einen Leuchtenumfang angeordneten, relativ zur Rundumleuchte ortsfesten Leuchtsektoren ausgebildet ist, wobei in den Leuchtsektoren LED-Leuchtkörper angeordnet sind.

Ein Flurförderzeug mit einer Rundumleuchte ist in der WO 2016/001669 A1 offenbart. Die Rundumleuchte ist auf dem Fahrerschutzdach befestigt und dient der Warnung von im Umfeld des Flurförderzeugs befindlichen Personen. Mit Hilfe der Rundumleuchte soll verhindert werden, dass es zu Kollisionen des Flurförderzeugs bzw. des damit transportierten Ladeguts oder der daran angebrachten Arbeitsgeräte mit den im Umfeld befindlichen Personen kommt. Hierbei wird durch das von der Rundumleuchte emittierte Licht die Aufmerksamkeit der Personen erregt, so dass diese ihr Verhalten im Hinblick auf die durch die Fahrbewegungen des Flurförderzeugs potentiell vorhandene Gefährdung anpassen können.

Personen, die sich nicht unmittelbar in Fahrtrichtung des Fahrzeugs befinden und daher nicht unmittelbar gefährdet sind, können das von der Rundumleuchte erzeugte Licht ebenfalls wahrnehmen und sich dadurch gestört oder beeinträchtigt fühlen, werden also unnötig belästigt. Die genannten Probleme können verstärkt auftreten, wenn sich in einer bestimmten Umgebung mehrere fahrende Flurförderzeuge befinden.

Rundumleuchten können als Blitzleuchten mit einer zentral angeordneten Hochstromentladelampe ausgeführt sein. Bekannt sind auch Rundumleuchten mit einem um 360 Grad rotierenden Spiegel. Diese Systeme verursachen Lichtreflexionen in allen Richtungen mit den daraus resultierenden, oben beschriebenen Nachteilen.

Aus der CN 105 318 268 A1 ist ein gattungsgemäßes Flurförderzeug mit einer Rundumleuchte bekannt, die LED-Leuchtkörper aufweist.

Aus der EP 2 056 268 A2 ist eine Warnleuchte für ein Fahrzeug bekannt, bei der zur verbesserten Wahrnehmung der optischen Anzeige eines bestimmten Betriebszustands des Fahrzeugs eine aperiodische Änderung eines die Leuchtcharakteristik von Leuchtimpulsen bestimmenden Leuchtparameters in einem Zeitintervall erfolgt. Diese aperiodische Änderung des Leuchtparameters wird durch einen Zufallsgenerator erzielt und äußert sich in einem aufmerksamkeitserhöhenden Flackern oder Flimmern des Warnlichts.

Die DE 10 2011 018 806 A1 offenbart ein Flurförderzeug mit an der Außenkontur des Flurförderzeugs verteilt angeordneten LED-Leuchtelementen, die Warnsignale in unterschiedliche Richtungen aussenden können. Die LED-Leuchtelemente werden in Form eines Rundum-Blitzlichtes mit zeitgleichen Warnsignalen betrieben oder in Form eines rotierenden Warnlichtes mit zeitversetzt nach Art eines Laufbandes umlaufenden Warnsignalen.

Die DE 103 20 142 A1 offenbart einen Gabelstapler mit einem um 360-Grad drehbaren Antriebsrad und mehreren am Fahrerschutzdach angeordneten Leuchten, die in Abhängigkeit von der Drehstellung des Antriebsrads automatisch zur Beleuchtung der jeweiligen Fahrtrichtung aktiviert werden.

Der vorliegenden Erfindung liegt die Aufgabe zu Grunde, ein gattungsgemäßes Flurförderzeug mit verbesserter Funktion der Rundumleuchte zur Verfügung zu stellen.

Diese Aufgabe wird erfindungsgemäß dadurch gelöst, dass die LED-Leuchtkörper in Abhängigkeit von Fahr- und/oder Arbeits- und/oder Betriebszuständen des Flurförderzeugs selektiv ansteuerbar sind und eine situationsabhängige Anzahl von Leuchtsektoren lichtemittierend aktiviert wird, wobei die LED-Leuchtkörper abhängig von der gewählten Fahrtrichtung betreibbar sind, wobei die LED-Leuchtkörper zumindest eines in Fahrtrichtung weisenden Leuchtsektors blitzmustererzeugend angesteuert werden und die LED-Leuchtkörper anderer Leuchtsektoren nicht oder nur in einem Blitzmuster mit verringerter Lichtstärke erzeugenden Maße angesteuert werden.

Erfindungsgemäß sind die LED-Leuchtkörper abhängig von der gewählten Fahrtrichtung betreibbar, wobei die LED-Leuchtkörper zumindest eines in Fahrtrichtung weisenden Leuchtsektors blitzmustererzeugend angesteuert werden und die LED-Leuchtkörper anderer Leuchtsektoren nicht oder nur in einem Blitzmuster mit verringerter Lichtstärke erzeugenden Maße angesteuert werden.

Der erfindungswesentliche Gedanke besteht demnach darin, Bewegungs- und Betriebszustände des Flurförderzeugs mit Hilfe der Rundumleuchte zu visualisieren und dabei potentiell gefährliche Zustände situationsspezifisch durch zielgerichtete Aktivierung von Leuchtsektoren zu signalisieren.

Hierbei können aus den Bewegungszuständen, d.h. den Fahr- und Arbeitsbewegungen des Flurförderzeugs resultierende Gefährdungen zielgerichtet angezeigt werden, indem Licht nur in Umgebungsbereiche emittiert wird, in denen sich potentiell gefährdete Personen aufhalten. Diese können die Bewegungszustände des Flurförderzeugs frühzeitig erkennen, auch bei schwachen Lichtverhältnissen. Hingegen werden störende Lichtreflexionen in Bereichen außerhalb der Bewegungsrichtung des Flurförderzeugs signifikant reduziert.

Wenn das Flurförderzeug zwischen den Fahr- und Arbeitsbewegungen temporär stillsteht, kann durch eine Dimmfunktion der Rundumleuchte die Helligkeit von Warnblitzsignalen herabgesetzt werden, beispielsweise auf 10%. Eine Dimmfunktion lässt sich beispielsweise dadurch erzielen, dass nur ein Teil der in einem bestimmten Leuchtsektor vorhandenen LED-Leuchtkörper aktiviert wird.

Im Falle von Betriebszuständen des Flurförderzeugs, die in einem bestimmten Umfeld, beispielsweise in einem explosionsgeschützten Bereich, ein erhöhtes Gefährungspotential haben und daher situationsabhängig eine Sicherheitsabschaltung des Flurförderzeugs nach sich ziehen können, kann dies ebenfalls durch die Rundumleuchte visuell kenntlich gemacht werden, indem ein besonderes Licht- bzw. Blitzsignal solche Betriebszustände signalisiert. Sinnvollerweise werden dabei Warnblitze nach allen Richtungen in die Umgebung abgegeben.

Ferner ist es möglich, im Rahmen der Erfassung von Betriebszuständen auch auf Fehlerzustände des Flurförderzeugs durch die Rundumleuchte aufmerksam zu machen.

Vorteilhafte Ausgestaltungen und Weiterbildungen der Erfindung sind Gegenstand von Unteransprüchen.

So ist es im Hinblick auf die Art der Visualisierung des vom Flurförderzeug ausgehenden Gefährdungspotentials günstig, wenn die LED-Leuchtkörper in einer die Strahlungsrichtung, die Lichtstärke, die Blitzfrequenz und/oder die Farbe des erzeugten Warnblitzlichts beeinflussenden Weise ansteuerbar sind.

Die Strahlungsrichtung kann durch gezieltes Ansteuern der derjenigen LED-Leuchtkörper beeinflusst werden, die sich in bestimmten Leuchtsektoren befinden, nämlich solchen, die in Annäherungsrichtung einer potentiell gefährdeten Person angeordnet sind. Lichtstärke und Blitzfrequenz können mit Zunahme des Gefährungspotentials situationsabhängig verstärkt werden, um das Blitzmuster noch auffälliger zu machen. Schließlich ist es auch möglich, beispielsweise durch Umschalten zwischen verschiedenfarbigen LED-Leuchtkörpern, die Farbe des erzeugten Warnblitzlichts zu verändern.

Die Rundumleuchte weist zweckmäßigerweise eine Kommunikationsschnittstelle zu einer Flurförderzeugsteuerung auf. Durch die Kommunikationsschnittstelle, die z.B. analog, als CAN-Bus, LIN-Bus oder ähnlich ausgeführt sein kann, werden Fahrzeugzustände an die Rundumleuchte gemeldet und zur Anzeige gebracht.

Es werden somit abhängig von relevanten Daten des Fahrzustands und/oder des Arbeitszustands und/oder des Betriebszustands die LED-Leuchtkörper in den Leuchtsektoren der Rundumleuchte angesteuert. Hierbei kann in die Rundumleuchte eine elektronische Steuerung integriert sein, mit der die Daten aus der Fahrzeugsteuerung verarbeitet und ergebnisabhängig die LED-Leuchtkörper einzeln oder gruppenweise angesteuert werden.

Bei den Daten des Fahrzustands kann es sich um Signale handeln, die z.B. aus den Signalen eines Fahrtrichtungsschalters oder Fahrpedals abgeleitet werden und zur gewählten Fahrtrichtung sowie zur Fahrgeschwindigkeit korrelieren.

Bei einer Kurvenfahrt lassen sich ferner aus dem Lenkeinschlagwinkel (Soll-Einschlagwinkel am Lenkrad oder Ist-Einschlagwinkel an den gelenkten Rädern der Lenkachse)

Signale als zusätzliche Daten zum Fahrzustand ableiten. Daten zu den Arbeitszuständen können Signale einer z.B. per Joystick angesteuerten Hub- oder Senkbewegung einer Lasthebeeinrichtung umfassen.

Zu den Daten des Betriebszustands zählen Informationen über eine Störung im Flurförderzeug. Eine Störung des Flurförderzeugs kann beispielsweise durch eine erhöhte Frequenz der Warnblitze oder durch eine andere Farbe angezeigt werden.

Zweckmäßigerweise ist jedem Leuchtsektor ein feststehendes, jeweils mit einer Mehrzahl von LED-Leuchtkörpern versehenes LED-Modul zugeordnet.

Hierbei kann jedes LED-Modul eine Mehrzahl von vertikal übereinander angeordneten LED-Leuchtkörpern aufweisen.

In der Draufsicht auf die Rundumleuchte gesehen sind die LED-Module bevorzugt in einem Innenbereich der Rundumleuchte in Oktaederform angeordnet.

Um eine zielgerichtete Abgabe des von der LED-Warnblitzleuchte erzeugten Lichts zu verbessern, wird vorgeschlagen, dass jeweils zwischen zwei Leuchtsektoren eine radiale Reflektorwand angeordnet ist.

Es erweist sich eine Ausgestaltung als günstig, gemäß der die LED-Leuchtkörper in den Leuchtsektoren, die seitlich benachbart zu einem in Fahrtrichtung weisenden Leuchtsektor daran unmittelbar angrenzen, mit verringerter Lichtstärke betrieben werden.

In Weiterbildung der Erfindung sind die LED-Leuchtkörper abhängig von einem Lenkwinkel des Flurförderzeugs betreibbar, wobei die LED-Leuchtkörper zumindest eines in Richtung einer eingeschlagenen Kurve weisenden Leuchtsektors blitzmustererzeugend angesteuert werden und die LED-Leuchtkörper anderer Leuchtsektoren nicht oder nur in einem Blitzmuster mit verringerter Lichtstärke erzeugenden Maße angesteuert werden.

Analog zu der im Zusammenhang mit der Geradeausfahrt beschriebenen Ausgestaltung ist es günstig, wenn die LED-Leuchtkörper in den Leuchtsektoren, die seitlich benachbart zu einem in Richtung der eingeschlagenen Kurve weisenden Leuchtsektor daran unmittelbar angrenzen, mit verringerter Lichtstärke betreibbar werden.

Der Hub- und Senkbetrieb als Arbeitszustand des Flurförderzeugs lässt sich gemäß einer Ausgestaltung der Erfindung durch Lichtsignale der Rundumleuchte visualisieren, indem bei einer anhebenden Betätigung einer Lasthebeeinrichtung durch zeitversetzte Ansteuerung von vertikal übereinander angeordneten LED-Leuchtkörpern ein Lauflicht von unten nach oben und/oder bei einer absenkenden Betätigung der Lasthebeeinrichtung durch zeitversetzte Ansteuerung von vertikal übereinander angeordneten LED-Leuchtkörpern ein Lauflicht von oben nach unten erzeugbar ist.

In einer Ausführungsvariante der Erfindung ist die Rundumleuchte mit einem Beschleunigungssensor zur autonomen Erfassung der Bewegungsrichtung des Flurförderzeugs versehen.

Die Rundumleuchte kann mit einer autarken elektrischen Spannungsversorgung versehen sein, beispielsweise aufladbaren Lithium-Ionen-Batterien, wodurch bei ausreichendem Energieinhalt und Nachlademöglichkeiten die Notwendigkeit eines Anschlusses an das Energieversorgungsnetz des Flurförderzeugs entbehrlich ist.

Gemäß einer Ausgestaltung der Erfindung ist vorgesehen, dass in die Rundumleuchte ein Sensor zur Erfassung von Personen in der Umgebung des Flurförderzeugs integriert ist. Es können dadurch abhängig vom Erreichen oder Unterschreiten einer bestimmten Distanz zwischen Personen in der Umgebung und dem Flurförderzeug von der Rundumleuchte zielgerichtet von denjenigen Leuchtsektoren, die in Richtung der sich nähernden Person weisen, optische Warnsignale angegeben werden.

Sofern die Rundumleuchte mit einer Signalübertragungseinheit zum drahtlosen Senden und/oder Empfangen von Signalen versehen ist, beispielsweise mittels WLAN, Bluetooth oder anderen geeigneter Drahtlostechniken, lassen sich Gefahrenzustände nicht nur durch besondere Lichtsignale visualisieren, sondern z.B. zusätzlich an eine zentrale Leitstelle übermitteln.

Dies kann in Fällen sinnvoll sein, in denen aufgrund einer Störung, einer Sicherheitsabschaltung oder der Detektion von explosionsfähiger Atmosphäre das Flurförderzeug abgeschaltet wurde.

Es ist auch möglich, über die Signalübertragungseinheit andere Warnleuchten, die stationär sein können oder sich auf mobilen Einheiten befinden, automatisch zu aktivieren.

Weitere Vorteile und Einzelheiten der Erfindung werden anhand des in der schematischen Figur dargestellten Ausführungsbeispiels näher erläutert. Dabei zeigt
- Figur 1: eine Seitenansicht eines Flurförderzeugs mit Rundumleuchte,
- Figur 2: eine Seitenansicht und eine Draufsicht der Rundumleuchte,
- Figur 3: eine Darstellung der Wirkungsweise der Rundumleuchte bei Geradeausfahrt des Flurförderzeugs,
- Figur 4: eine Darstellung der Wirkungsweise der Rundumleuchte bei Kurvenfahrt des Flurförderzeugs,
- Figur 5: eine Darstellung der Wirkungsweise der Rundumleuchte im Arbeitsbetrieb des Flurförderzeugs,
- Figur 6: eine Draufsicht auf das Flurförderzeug und
- Figur 7: eine weitere Draufsicht auf das Flurförderzeug.

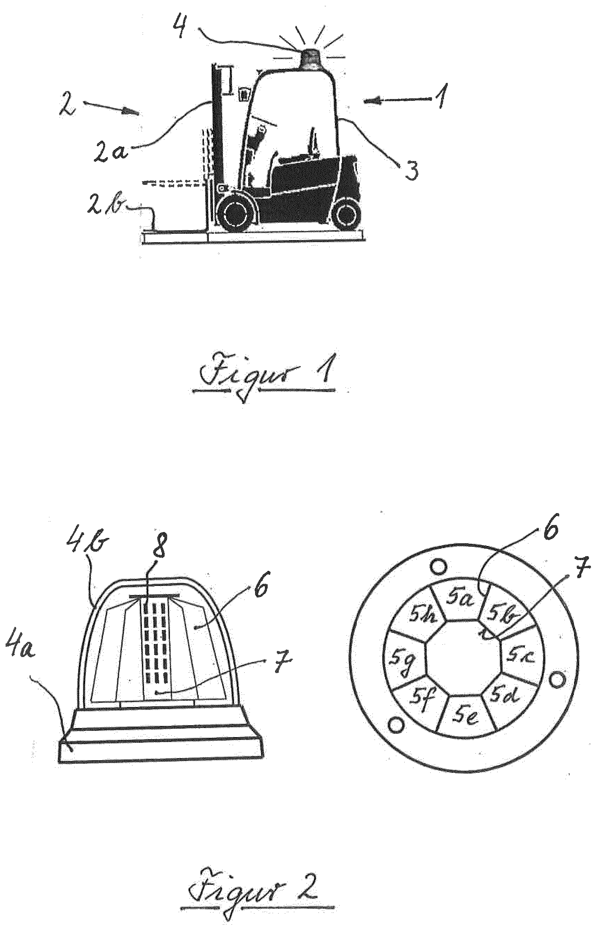

Das in Figur 1 dargestellte Flurförderzeug 1 ist als Frontsitz-Gabelstapler ausgeführt, das an der Vorderseite mit einer Lasthebeeinrichtung 2 in Form eines Hubmastes 2a und einer daran höhenbeweglichen Lastgabel 2b versehen ist. Auf einem Fahrerschutzdach 3 des Flurförderzeugs 1 ist eine Rundumleuchte 4 befestigt, die als LED-Warnblitzleuchte ausgebildet ist und entweder an eine elektrische Spannungsversorgung des Flurförderzeugs 1 angeschlossen ist oder mit einer autarken elektrischen Spannungsversorgung versehen sein kann, beispielsweise aufladbaren Lithium-Ionen-Batterien. Die Rundumleuchte 4 ist über eine in den Figuren nicht dargestellte Kommunikationsschnittstelle mit einer Flurförderzeugsteuerung verbunden. Dadurch können Daten zu Fahr-, Arbeits- und Betriebszuständen an die Rundumleuchte 4 weitergeben werden.

Der Prinzipaufbau der Rundumleuchte 4 ist in Figur 2 dargestellt. Die Rundumleuchte 4 weist einen Befestigungssockel 4a und eine transparente Abdeckhaube 4b auf und verfügt über eine Mehrzahl von über einen Leuchtenumfang angeordneten Leuchtsektoren 5a, 5b, 5c, 5d, 5e, 5f, 5g und 5h, die durch radiale Reflektorwände 6 voneinander getrennt sind. Jedem Leuchtsektor 5a, 5b, 5c, 5d, 5e, 5f, 5g und 5h ist in einem Innenbereich der Rundumleuchte 4 ein feststehendes, jeweils als Platine ausgeführtes LED-Modul 7 zugeordnet.

Jedes LED-Modul 7 ist jeweils mit einer Mehrzahl von LED-Leuchtkörpern 8 versehen, die im vorliegenden Ausführungsbeispiel in Reihen und Spalten angeordnet sind. In der Draufsicht auf die LED-Warnblitzleuchte gesehen sind die LED-Module 7 in Oktaederform angeordnet. Innerhalb des Oktaeders können sich andere Bauelemente der Rundumleuchte befinden, beispielsweise ein in den Figuren nicht dargestellter Beschleunigungssensor und/oder eine Signalübertragungseinheit.

Die LED-Leuchtkörper 8 sind in Abhängigkeit von Fahr- und/oder Arbeits- und/oder Betriebszuständen des Flurförderzeugs selektiv ansteuerbar.

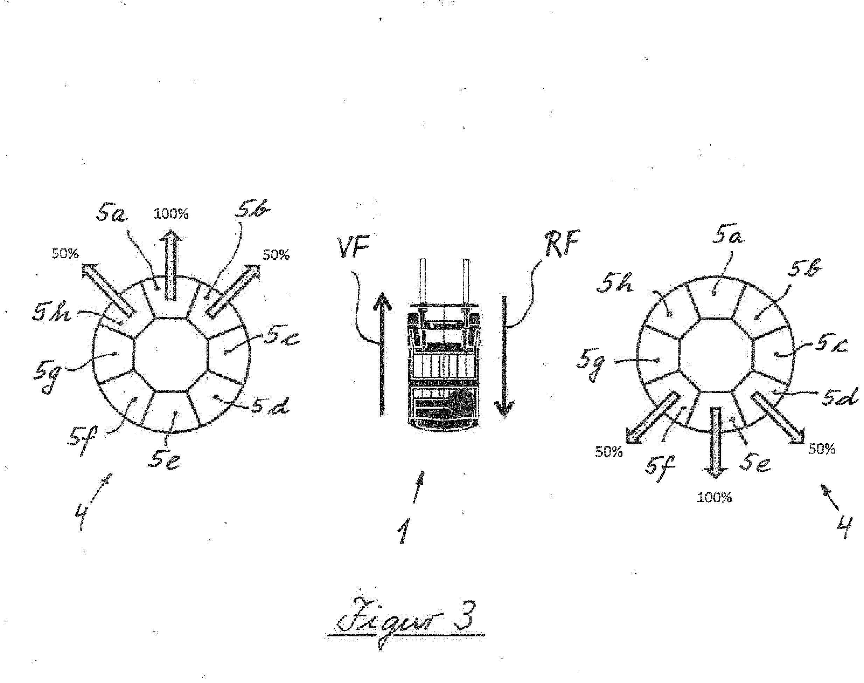

So werden z.B. bei Geradeausfahrt des Flurförderzeugs, wie aus Figur 3 ersichtlich ist, in der das Flurförderzeug 1 in Draufsicht und beiderseits davon jeweils die Rundumleuchte 4 in vereinfachter Darstellung in Draufsicht dargestellt ist, nur die LED-Leuchtkörper 8 zumindest eines, jeweils in die gewählte Fahrtrichtung - Vorwärtsfahrt oder Rückwärtsfahrt - weisenden Leuchtsektors lichtsignalerzeugend angesteuert. Somit ist die Strahlungsrichtung der Rundumleuchte 4 vom Fahrzustand abhängig.

Im vorliegenden Ausführungsbeispiel werden bei Vorwärtsfahrt - symbolisiert durch den in Figur 3 linken Fahrtrichtungspfeil VF seitlich des Flurförderzeugs 1 - nur die LED-Leuchtkörper 8 der Leuchtsektoren 5h, 5a und 5b zur Erzeugung von als Blitzmuster in Erscheinung tretenden optischen Signalen angesteuert (in der Figur 3 linke Darstellung der Rundumleuchte 4).

Hierbei können die LED-Leuchtkörper 8 in den Leuchtsektoren 5h und 5b, die unmittelbar an den direkt in Fahrtrichtung weisenden Leuchtsektor 5a angrenzen, mit verringerter Lichtstärke betrieben werden, z.B. mit nur 50% der Lichtstärke im Vergleich zu einer Lichtstärke von 100% im Leuchtsektor 5a.

Die LED-Leuchtkörper 8 der anderen Leuchtsektoren 5c, 5d, 5e, 5f und 5g werden hingegen nicht angesteuert, so dass dort keine Blitzlichtmuster erzeugt werden.

Analog dazu werden bei Rückwärtsfahrt - symbolisiert durch den in Figur 3 rechten Fahrtrichtungspfeil RF seitlich des Flurförderzeugs 1 - nur die LED-Leuchtkörper 8 der Leuchtsektoren 5d, 5e und 5f zur Erzeugung von als Blitzmuster in Erscheinung tretenden optischen Signalen angesteuert (in der Figur 3 rechte Darstellung der Rundumleuchte 4).

Ferner können die LED-Leuchtkörper 8 in den Leuchtsektoren 5d und 5f, die unmittelbar an den direkt in Fahrtrichtung weisenden Leuchtsektor 5e angrenzen, mit verringerter Lichtstärke betrieben werden, z.B. mit nur 50% der Lichtstärke im Vergleich zu einer Lichtstärke von 100% im Leuchtsektor 5e. Die LED-Leuchtkörper 8 der anderen Leuchtsektoren 5g, 5h, 5a, 5b und 5c werden nicht angesteuert und es werden dort somit keine Blitzlichtmuster erzeugt.

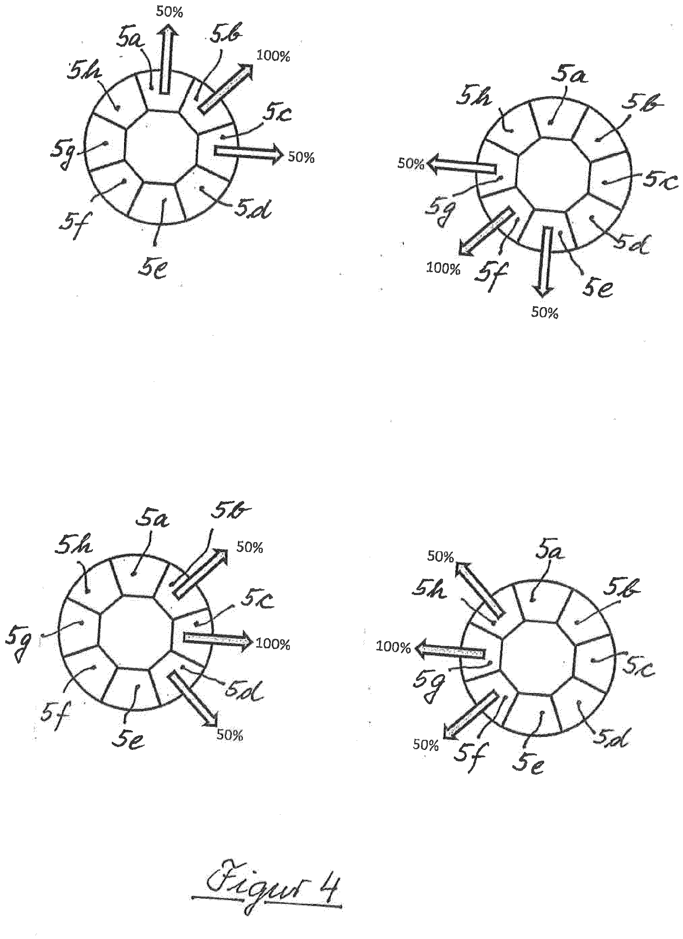

Bei einer Kurvenfahrt des Flurförderzeugs 1 sind die LED-Leuchtkörper 8 zusätzlich abhängig von einem Lenkwinkel des in der Regel mit einer lenkbaren Hinterachse ausgestatteten Flurförderzeugs 1 betreibbar. Hierbei werden z.B. bei einer Vorwärtsfahrt mit Kurve nach Rechts entsprechend der in Figur 4 linken oberen Darstellung die LED-Leuchtkörper 8 zumindest des diagonal nach vorne rechts ausgerichteten und direkt in Richtung der eingeschlagenen Kurve weisenden Leuchtsektors 5b angesteuert, um ein Blitzmuster zu erzeugen. Die LED-Leuchtkörper 8 in den Leuchtsektoren 5a und 5c, die unmittelbar an den Leuchtsektor 5b angrenzen, können mit verringerter Lichtstärke betrieben werden, z.B. mit nur 50% der Lichtstärke im Vergleich zu einer Lichtstärke von 100% im Leuchtsektor 5b.

Bei maximalem Lenkwinkel, d.h. dem größtmöglichen Radeinschlag und dem kleinsten Kurvenradius des Flurförderzeugs 1 wird - entsprechend der in Figur 4 linken unteren

Darstellung - der nach rechts weisende Leuchtsektor 5c angesteuert. Die LED-Leuchtkörper 8 in den Leuchtsektoren 5b und 5d, die unmittelbar an den Leuchtsektor 5c angrenzen, können mit verringerter Lichtstärke betrieben werden.

Vergleichbare Verhältnisse ergeben sich bei Rückwärtsfahrt des Flurförderzeugs 1 z.B. in Kurvenfahrt nach Links, entsprechend der in Figur 4 rechten oberen Darstellung. Hierbei werden die LED-Leuchtkörper 8 zumindest des diagonal nach hinten links ausgerichteten und direkt in Richtung der eingeschlagenen Kurve weisenden Leuchtsektors 5f angesteuert, um ein Blitzmuster zu erzeugen. Die LED-Leuchtkörper 8 in den Leuchtsektoren 5e und 5g, die unmittelbar an den Leuchtsektor 5f angrenzen, können mit verringerter Lichtstärke betrieben werden, z.B. mit nur 50% der Lichtstärke im Vergleich zu einer Lichtstärke von 100% im Leuchtsektor 5b.

Bei maximalem Lenkwinkel wird - entsprechend der in Figur 4 rechten unteren Darstellung - der nach links weisende Leuchtsektor 5g angesteuert. Die LED-Leuchtkörper 8 in den Leuchtsektoren 5f und 5h, die unmittelbar an den Leuchtsektor 5g angrenzen, können mit verringerter Lichtstärke betrieben werden.

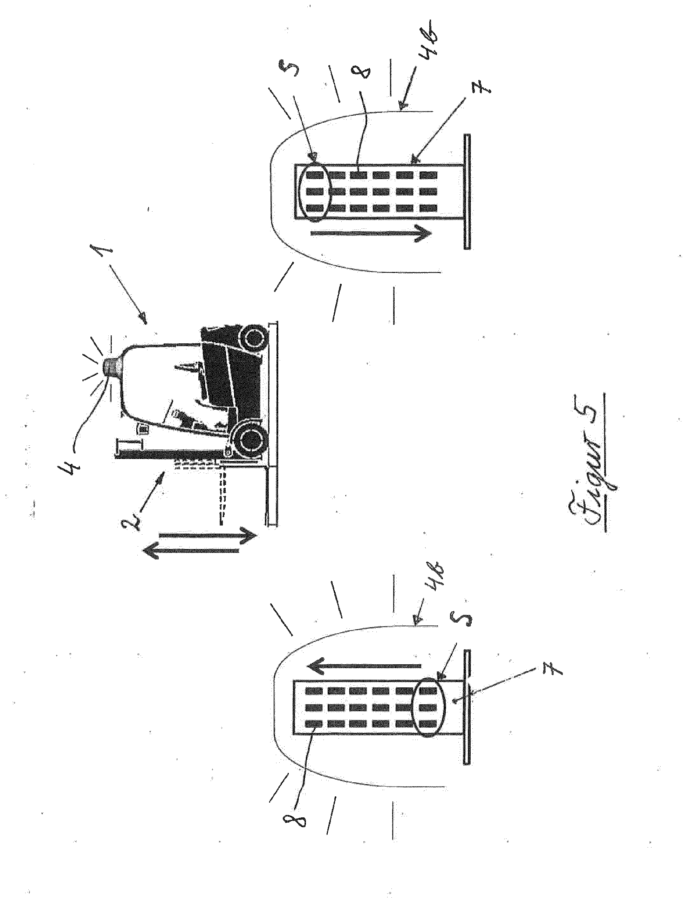

Figur 5 zeigt eine Ausgestaltung, bei der Lichtsignale der Rundumleuchte 4 den Hub- und Senkbetrieb als Arbeitszustand des Flurförderzeugs 1 visualisieren. Zu diesem Zweck wird bei einer anhebenden Betätigung der Lasthebeeinrichtung 2 (nach oben weisender Pfeil seitlich des Flurförderzeugs 1) durch zeitversetzte Ansteuerung der vertikal übereinander angeordneten LED-Leuchtkörper 8 in den LED-Modulen 7 ausgehend von einer Startreihe S der untersten LED-Leuchtkörper 8 ein Lauflicht von unten nach oben erzeugt (in der Figur 5 linke Darstellung der Rundumleuchte 4).

Bei einer absenkenden Betätigung der Lasthebeeinrichtung 2 (nach unten weisender Pfeil seitlich des Flurförderzeugs 1) wird durch zeitversetzte Ansteuerung der vertikal übereinander angeordneten LED-Leuchtkörper 8 in den LED-Modulen 7 ausgehend von einer Startreihe S der obersten LED-Leuchtkörper 8 ein Lauflicht von oben nach unten erzeugt (in der Figur 5 rechte Darstellung der Rundumleuchte 4).

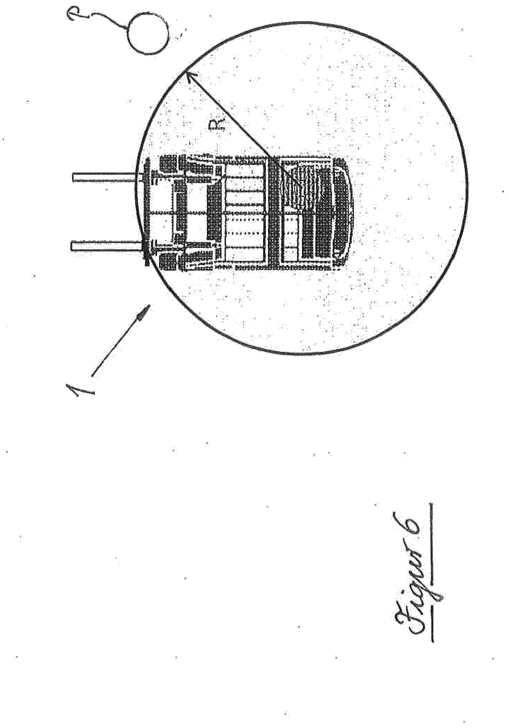

Figur 6 bezieht sich auf eine Ausgestaltung, bei der in die Rundumleuchte 4 ein nicht dargestellter Sensor zur Erfassung von Personen in der Umgebung des Flurförderzeugs integriert ist. Hierbei werden bei Annäherung einer Person P und Erreichen oder Unterschreiten eines Erfassungsradius R in Richtung der Person P weisende und damit von dieser wahrnehmbare Warnblitzsignale abgegeben. Die LED-Leuchtkörper 8 bzw. die LED-Module 7 derjenigen Leuchtsektoren, die in Richtung der sich nähernden Person P weisen, werden dabei zielgerichtet angesteuert.

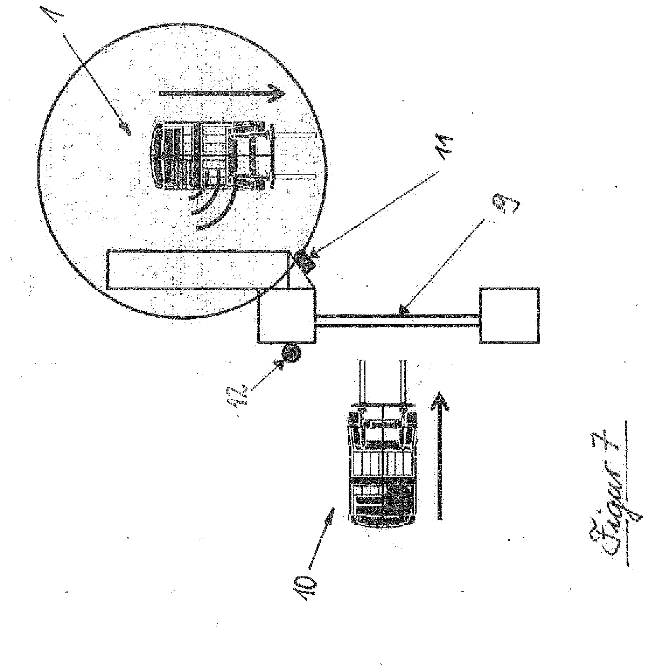

Bei der in Figur 7 dargestellten Ausgestaltung ist die als erfindungsgemäße LED-Warnblitzleuchte ausgebildete Rundumleuchte 4 eines Flurförderzeugs 1 zusätzlich mit einer Signalübertragungseinheit zum drahtlosen Senden und/oder Empfangen von Signalen versehen (symbolisiert durch Funkwellen), beispielsweise mittels WLAN, Bluetooth oder anderer geeigneter Drahtlostechniken. Damit lassen sich Gefahrenzustände nicht nur durch Warnblitze visualisieren, sondern können z.B. an eine zentrale Leitstelle oder andere Warneinrichtungen übermittelt werden.

Im dargestellten Ausführungsbeispiel bewegt sich das Flurförderzeug 1, das mit einer Rundumleuchte 4 mit integrierter Signalübertragungseinheit versehen ist, in Richtung einer Hallenausfahrt 9, hinter der sich ein weiteres Flurförderzeug 10 befindet. Das drahtlos ausgesendete Signal des Flurförderzeugs 1 wird von einem Sensor 11 empfangen und löst ein optisches Signal einer benachbart zur Hallenausfahrt 9 im Halleninneren angeordneten Leuchte 12 aus, so dass die Bedienperson des Flurförderzeugs 10 gewarnt wird.

## Patentansprüche

1. Flurförderzeug (1) mit einer Rundumleuchte (4), die einen Befestigungssockel (4a) und eine transparente Abdeckhaube (4b) aufweist und als LED-Warnblitzleuchte mit einer Mehrzahl von über einen Leuchtenumfang angeordneten, relativ zur Rundumleuchte (4) ortsfesten Leuchtsektoren (5a, 5b, 5c, 5d, 5e, 5f, 5g, 5h) ausgebildet ist, wobei in den Leuchtsektoren (5a, 5b, 5c, 5d, 5e, 5f, 5g, 5h) LED-Leuchtkörper (8) angeordnet sind, **dadurch gekennzeichnet, dass** die LED-Leuchtkörper (8) in Abhängigkeit von Fahr- und/oder Arbeits- und/oder Betriebszuständen des Flurförderzeugs (1) selektiv ansteuerbar sind und eine situationsabhängige Anzahl von Leuchtsektoren (5a, 5b, 5c, 5d, 5e, 5f, 5g, 5h) lichtemittierend aktiviert wird, wobei die LED-Leuchtkörper (8) abhängig von der gewählten Fahrtrichtung betreibbar sind, wobei die LED-Leuchtkörper (8) zumindest eines in Fahrtrichtung weisenden Leuchtsektors blitzmustererzeugend angesteuert werden und die LED-Leuchtkörper (8) anderer Leuchtsektoren nicht oder nur in einem Blitzmuster mit verringerter Lichtstärke erzeugenden Maße angesteuert werden.

2. Flurförderzeug nach Anspruch 1, **dadurch gekennzeichnet, dass** die LED-Leuchtkörper (8) in einer die Strahlungsrichtung, die Lichtstärke, die Blitzfrequenz und/oder die Farbe des erzeugten Warnblitzlichts beeinflussenden Weise ansteuerbar sind.

3. Flurförderzeug nach Anspruch 1 oder 2, **dadurch gekennzeichnet, dass** die Rundumleuchte (4) eine Kommunikationsschnittstelle zu einer Flurförderzeugsteuerung aufweist.

4. Flurförderzeug nach einem der Ansprüche 1 bis 3, **dadurch gekennzeichnet, dass** jedem Leuchtsektor (5a bzw. 5b bzw. 5c bzw. 5d bzw. 5e bzw. 5f bzw. 5g bzw.5h) ein feststehendes, jeweils mit einer Mehrzahl von LED-Leuchtkörpern (8) versehenes LED-Modul (7) zugeordnet ist.

5. Flurförderzeug nach Anspruch 4, **dadurch gekennzeichnet, dass** jedes LED-Modul (7) eine Mehrzahl von vertikal übereinander angeordneten LED-Leuchtkörpern (8) aufweist.

6. Flurförderzeug nach Anspruch 4 oder 5, **dadurch gekennzeichnet, dass** in der Draufsicht auf die Rundumleuchte (4) gesehen die LED-Module (7) in einem Innenbereich der Rundumleuchte (4) in Oktaederform angeordnet sind.

7. Flurförderzeug nach einem der Ansprüche 1 bis 6, **dadurch gekennzeichnet, dass** jeweils zwischen zwei Leuchtsektoren eine radiale Reflektorwand (6) angeordnet ist.

8. Flurförderzeug nach einem der Ansprüche 1 bis 7, **dadurch gekennzeichnet, dass** die LED-Leuchtkörper in den Leuchtsektoren, die seitlich benachbart zu einem in Fahrtrichtung weisenden Leuchtsektor daran unmittelbar angrenzen, mit verringerter Lichtstärke betrieben werden.

9. Flurförderzeug nach einem der Ansprüche 1 bis 8, **dadurch gekennzeichnet, dass** die LED-Leuchtkörper (8) abhängig von einem Lenkwinkel des Flurförderzeugs (1) betreibbar sind, wobei die LED-Leuchtkörper (8) zumindest eines in Richtung einer eingeschlagenen Kurve weisenden Leuchtsektors blitzmustererzeugend angesteuert werden und die LED-Leuchtkörper (8) anderer Leuchtsektoren nicht oder nur in einem Blitzmuster mit verringerter Lichtstärke erzeugenden Maße angesteuert werden.

10. Flurförderzeug nach Anspruch 9, **dadurch gekennzeichnet, dass** die LED-Leuchtkörper (8) in den Leuchtsektoren, die seitlich benachbart zu einem in Richtung der eingeschlagenen Kurve weisenden Leuchtsektor daran unmittelbar angrenzen, mit verringerter Lichtstärke betrieben werden.

11. Flurförderzeug nach einem der Ansprüche 1 bis 10, **dadurch gekennzeichnet, dass** bei einer anhebenden Betätigung einer Lasthebeeinrichtung (2) durch zeitversetzte Ansteuerung von vertikal übereinander angeordneten LED-Leuchtkörpern (8) ein Lauflicht von unten nach oben und/oder bei einer absenkenden Betätigung der Lasthebeeinrichtung (2) durch zeitversetzte Ansteuerung von vertikal übereinander angeordneten LED-Leuchtkörpern (8) ein Lauflicht von oben nach unten erzeugbar ist.

12. Flurförderzeug nach einem der Ansprüche 1 bis 11, **dadurch gekennzeichnet, dass** die Rundumleuchte (4) mit einem Beschleunigungssensor zur autonomen Erfassung der Bewegungsrichtung des Flurförderzeugs (1) versehen ist.

13. Flurförderzeug nach einem der Ansprüche 1 bis 12, **dadurch gekennzeichnet, dass** die Rundumleuchte (4) mit einer autarken elektrischen Spannungsversorgung versehen ist.

14. Flurförderzeug nach einem der Ansprüche 1 bis 13, **dadurch gekennzeichnet, dass** in die Rundumleuchte (4) ein Sensor zur Erfassung von Personen in der Umgebung des Flurförderzeugs (1) integriert ist.

15. Flurförderzeug nach einem der Ansprüche 1 bis 12, **dadurch gekennzeichnet, dass** die Rundumleuchte (4) mit einer Signalübertragungseinheit zum drahtlosen Senden und/oder Empfangen von Signalen versehen ist.

## Claims

1. Industrial truck (1) having a beacon (4), with the latter having a mounting base (4a) and a transparent cover lens (4b) and being configured in the form of an LED warning flashing lamp with a plurality of lighting sectors (5a, 5b, 5c, 5d, 5e, 5f, 5g, 5h), which are arranged over a lamp circumference and fixed in place in relation to the beacon (4), wherein LED lighting bodies (8) are arranged in the lighting sectors (5a, 5b, 5c, 5d, 5e, 5f, 5g, 5h), **characterized in that** the LED lighting bodies (8) are selectively controllable in dependence on the driving and/or working and/or operating states of the industrial truck (1) and a situation-dependent number of lighting sectors (5a, 5b, 5c, 5d, 5e, 5f, 5g, 5h) are activated to emit light, wherein the LED lighting bodies (8) are operable depending on the selected driving direction, wherein the LED lighting bodies (8) of at least one lighting sector pointing in the driving direction are controlled to generate flash patterns and the LED lighting bodies (8) of other lighting sectors are not controlled, or are controlled only to an extent such that flash patterns are generated at a reduced luminous intensity.

2. Industrial truck according to Claim 1, **characterized in that** the LED lighting bodies (8) are controllable in a manner so as to influence the radiation direction, the luminous intensity, the flash frequency and/or the colour of the generated warning flashing light.

3. Industrial truck according to Claim 1 or 2, **characterized in that** the beacon (4) has a communication interface with an industrial truck controller.

4. Industrial truck according to any of Claims 1 to 3, **characterized in that** each lighting sector (5a or 5b or 5c or 5d or 5e or 5f or 5g or 5h) is assigned a fixed LED module (7), which is provided in each case with a plurality of LED lighting bodies (8).

5. Industrial truck according to Claim 4, **characterized in that** each LED module (7) has a plurality of LED lighting bodies (8) which are arranged vertically one on top of another.

6. Industrial truck according to Claim 4 or 5, **characterized in that**, viewed in a top view of the beacon (4), the LED modules (7) are arranged in an internal region of the beacon (4) in the shape of an octahedron.

7. Industrial truck according to any of Claims 1 to 6, **characterized in that** a radial reflector wall (6) is arranged in each case between two lighting sectors.

8. Industrial truck according to any of Claims 1 to 7, **characterized in that** the LED lighting bodies in the lighting sectors which laterally immediately adjoin a lighting sector pointing in the driving direction are operated at a reduced luminous intensity.

9. Industrial truck according to any of Claims 1 to 8, **characterized in that** the LED lighting bodies (8) are operable depending on a steering angle of the industrial truck (1), wherein the LED lighting bodies (8) of at least one lighting sector pointing in the direction of a turn that is being taken are controlled to generate flash patterns and the LED lighting bodies (8) of other lighting sectors are not controlled, or are controlled only to an extent such that flash patterns are generated at a reduced luminous intensity.

10. Industrial truck according to Claim 9, **characterized in that** the LED lighting bodies (8) in the lighting sectors which laterally immediately adjoin a lighting sector pointing in the direction of the turn that is being taken are operated at a reduced luminous intensity.

11. Industrial truck according to any of Claims 1 to 10, **characterized in that**, in the case of a lifting actuation of a load-lifting device (2), a chase light from the bottom upwards is generable by way of LED lighting bodies (8) arranged vertically one above another being controlled with a time offset and/or, in the case of a lowering actuation of the load-lifting device (2), a chase light from the top downwards is generable by way of LED lighting bodies (8) arranged vertically one above another being controlled with a time offset.

12. Industrial truck according to any of Claims 1 to 11, **characterized in that** the beacon (4) is provided with an acceleration sensor for autonomously detecting the movement direction of the industrial truck (1).

13. Industrial truck according to any of Claims 1 to 12, **characterized in that** the beacon (4) is provided with a self-sufficient voltage supply.

14. Industrial truck according to any of Claims 1 to 13, **characterized in that** a sensor for detecting persons in the surrounding area of the industrial truck (1) is integrated in the beacon (4).

15. Industrial truck according to any of Claims 1 to 12, **characterized in that** the beacon (4) is provided with a signal transmission unit for wirelessly transmitting and/or receiving signals.

## Revendications

1. Chariot de manutention (1), comprenant un gyrophare (4) qui présente un socle de fixation (4a) et un capot transparent (4b) et est réalisé sous forme de lampe LED d'avertissement clignotante pourvue d'une pluralité de segments lumineux (5a, 5b, 5c, 5d, 5e, 5f, 5g, 5h) répartis autour d'une circonférence de lampe et stationnaires par rapport au gyrophare (4), dans lequel des luminaires LED (8) sont disposés dans les segments lumineux (5a, 5b, 5c, 5d, 5e, 5f, 5g, 5h),
**caractérisé en ce que** les luminaires LED (8) peuvent être pilotés sélectivement en fonction des états de conduite et/ou de travail et/ou de fonctionnement du chariot de manutention (1), et un nombre de segments lumineux (5a, 5b, 5c, 5d, 5e, 5f, 5g, 5h) dépendant de la situation est activé pour émettre de la lumière, dans lequel les luminaires LED (8) peuvent fonctionner en fonction du sens de la marche choisi, dans lequel les luminaires LED (8) d'au moins un secteur lumineux orienté dans le sens de la marche sont pilotés pour générer un motif clignotant, et les luminaires LED (8) d'autres segments lumineux ne sont pas pilotés ou seulement pour générer un motif clignotant d'une intensité lumineuse réduite.

2. Chariot de manutention selon la revendication 1, **caractérisé en ce que** les luminaires LED (8) peuvent être pilotés de manière à influencer la direction de rayonnement, l'intensité lumineuse, la fréquence de clignotement et/ou la couleur de la lumière d'avertissement clignotante générée.

3. Chariot de manutention selon la revendication 1 ou 2, **caractérisé en ce que** le gyrophare (4) présente une interface de communication avec un dispositif de commande de chariot de manutention.

4. Chariot de manutention selon l'une quelconque des revendications 1 à 3, **caractérisé en ce qu'**un module LED (7) stationnaire, respectivement muni d'une pluralité de luminaires LED (8), est associé à chaque secteur lumineux (5a ou 5b ou 5c ou 5d ou 5e ou 5f ou 5g ou 5h, respectivement).

5. Chariot de manutention selon la revendication 4, **caractérisé en ce que** chaque module LED (7) présente une pluralité de luminaires LED (8) superposés verticalement.

6. Chariot de manutention selon la revendication 4 ou 5, **caractérisé en ce que** dans une vue de dessus sur le gyrophare (4), les modules LED (7) sont disposés en forme d'octaèdre dans une zone intérieure du gyrophare (4) .

7. Chariot de manutention selon l'une quelconque des revendications 1 à 6, **caractérisé en ce qu'**une paroi de réflecteur radiale (6) est disposée entre deux segments lumineux respectivement.

8. Chariot de manutention selon l'une quelconque des revendications 1 à 7, **caractérisé en ce que** les luminaires LED dans les segments lumineux qui sont directement adjacents à ceux-ci en étant latéralement voisins d'un secteur lumineux orienté dans le sens de la marche de manière fonctionnent avec une intensité lumineuse réduite.

9. Chariot de manutention selon l'une quelconque des revendications 1 à 8, **caractérisé en ce que** les luminaires LED (8) peuvent fonctionner en fonction d'un angle de braquage du chariot de manutention (1), dans lequel les luminaires LED (8) d'au moins un secteur lumineux orienté dans la direction d'un virage emprunté sont pilotés pour générer un motif clignotant, et les luminaires LED (8) d'autres segments lumineux ne sont pas pilotés ou seulement dans la mesure où ils génèrent un motif clignotant d'une intensité lumineuse réduite.

10. Chariot de manutention selon la revendication 9, **caractérisé en ce que** les luminaires LED (8) dans les segments lumineux qui sont directement adjacents à ceux-ci en étant latéralement voisins d'un secteur lumineux orienté dans la direction du virage emprunté fonctionnent avec une intensité lumineuse réduite.

11. Chariot de manutention selon l'une quelconque des revendications 1 à 10, **caractérisé en ce que** lors d'un actionnement de montée d'un dispositif de levage (2), un pilotage différé de luminaires LED (8) verticalement superposés permet de générer un chenillard de bas en haut, et/ou lors d'un actionnement de descente du dispositif de levage (2), un pilotage différé de luminaires LED (8) verticalement superposés permet de générer un chenillard de haut en bas.

12. Chariot de manutention selon l'une quelconque des revendications 1 à 11, **caractérisé en ce que** le gyrophare (4) est muni d'un capteur d'accélération pour la détection autonome de la direction de déplacement du chariot de manutention (1).

13. Chariot de manutention selon l'une quelconque des revendications 1 à 12, **caractérisé en ce que** le gyrophare (4) est muni d'une alimentation en tension électrique indépendante.

14. Chariot de manutention selon l'une quelconque des revendications 1 à 13, **caractérisé en ce qu'**un capteur permettant de détecter des personnes dans l'environnement du chariot de manutention (1) est intégré dans le gyrophare (4).

15. Chariot de manutention selon l'une quelconque des revendications 1 à 12, **caractérisé en ce que** le gyrophare (4) est muni d'une unité de transmission de signal pour l'émission et/ou la réception sans fil de signaux.
